# EUROPÄISCHE PATENTSCHRIFT

(11) **EP 2 001 952 B1**
(45) Veröffentlichungstag und Bekanntmachung des Hinweises auf die Patenterteilung: **25.11.2009**
(21) Anmeldenummer: 07711401.5
(22) Anmeldetag: 29.01.2007
(51) Int. Cl.: C08L 9/00, C09D 109/00, C09D 121/00, C09J 109/00, C09J 121/00, C08L 21/00, C09J 9/00

(54) **KLEB-/DICHTSTOFFE AUF BASIS VON FLÜSSIGKAUTSCHUKEN**
BONDING AGENTS AND SEALANTS BASED ON LIQUID RUBBERS
ADHÉSIFS/ENDUITS À BASE DE CAOUTCHOUCS LIQUIDES

(30) Priorität: 06.04.2006 DE 102006016577
(43) Veröffentlichungstag der Anmeldung: 17.12.2008
(73) Patentinhaber: Henkel AG & Co. KGaA, 40589 Düsseldorf (DE)
(72) Erfinder: KOHLSTRUNG, Rainer, 68723 Plankstadt (DE); RAPPMANN, Klaus, 69469 Weinheim-Rittenweier (DE)
(86) Internationale Anmeldenummer: PCT/EP2007/000728
(87) Internationale Veröffentlichungsnummer: WO 2007/118529

(56) Entgegenhaltungen:
- EP-A- 0 369 165
- EP-A1- 0 097 394
- WO-A-02/48255
- DE-A1- 19 502 381
- DE-C1- 3 834 818

## Beschreibung

Die vorliegende Erfindung betrifft eine einkomponentige, heißhärtende reaktive Zusammensetzung auf der Basis von natürlichen und/oder synthetischen olefinische Doppelbindungen enthaltenden Elastomeren und Vulkanisationsmitteln sowie deren Verwendung als einkomponentiger Klebstoff, Dichtstoff, Versiegelungsmasse oder Beschichtungsmasse im Fahrzeugbau, insbesondere im Automobilrohbau.

Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Maße mit Hilfe von Klebstoffen gefügt. Für strukturelle Klebungen werden dabei hohe Anforderungen an die Festigkeit des Klebeverbundes gestellt. Hochfeste und gleichzeitig schlagzähe, schälfeste und schlagschälfeste Klebstoffe, die heute für die Anwendung im Automobilrohbau eingesetzt werden, sind bisher hauptsächlich auf Basis von Epoxiden und Elastomer-modifizierten Epoxiden bzw. Acrylaten bekannt.

Dabei werden diese heißhärtenden, reaktiven Klebstoffe (oft auch als Heißschmelzklebstoffe formuliert) für Bördeinahtverklebungen bzw. überlappende Klebungen im Rohbau auf beöltes Blech aufgetragen und gefügt. Die Aushärtung der hierbei eingesetzten Klebstoffe oder Dichtstoffe erfolgt später in den Lacktrockenöfen. Vorher durchlaufen die geklebten bzw. abgedichteten oder versiegelten Teile Reinigungs-, Phosphatier- und Tauchgrundierungsstufen. Durch die in diesen Stufen verwendeten Behandlungsmittel können die Kleb- bzw. Dicht- oder Versiegelungsmittel aus den Klebefugen gespült werden. Um dieses zu verhindern, wird das Kleb-, Dicht- oder Versiegelungsmittel mittels Vorhärtungsmechanismen wie zum Beispiel mit Induktionsheizungen, Rohbauöfen, Infrarot-Strahlern vorgehärtet oder rheologisch entsprechend eingestellt, um die nachfolgende Vorbehandlung zu überstehen ohne ausgewaschen zu werden. Zusätzlich können Schweißpunkte zur Versteifung der Karosserieteile gesetzt werden. Die Aushärtung der Klebstoffe erfolgt beim Durchlaufen der anschließenden Lacköfen (für den Kathodischen Tauchlack (KTL), Füller, Decklack, etc.).

Aus der EP-A-0 308 664 sind Epoxidharz-Zusammensetzungen bekannt, die ein Epoxid-Addukt eines carboxylgruppenhaltigen Copolymeren auf Basis von Butadien-Acrylnitril oder ähnlichen Butadiencopolymeren enthalten sowie ein Umsetzungsprodukt eines in Epoxidharzen löslichen oder dispergierbaren elastomeren Prepolymeren mit endständigen Isocyanatgruppen mit einem Polyphenol oder Aminophenol sowie nachfolgender Umsetzung dieses Adduktes mit einem Epoxidharz. Weiterhin können diese Zusammensetzungen ein oder mehrere Epoxidharze enthalten. Fernerhin werden zur Härtung für diese Zusammensetzungen aminofunktionelle Härter, Polyaminoamide, Polyphenole, Polycarbonsäuren und ihre Anhydride oder katalytische Härtungsmittel und gegebenenfalls Beschleuniger vorgeschlagen. Es wird angegeben, dass diese Zusammensetzungen sich als Klebstoffe eignen, die je nach konkreter Zusammensetzung hohe Festigkeit, hohe Glasübergangstemperatur, hohe Schälfestigkeit, hohe Schlagzähigkeit oder hohe Rissfortpflanzungsbeständigkeit haben können.

Die EP-A-338985 beschreibt modifizierte Epoxidharze, die ein flüssiges Copolymeres auf der Basis von Butadien, einem polaren, ethylenisch ungesättigten Comonomeren und ggf. weiteren ethylenisch ungesättigten Comonomeren enthalten und weiterhin ein Umsetzungsprodukt aus dihydroxyterminierten bzw. diaminoterminierten Polyalkylenglycolen und Diisocyanaten sowie einem Monophenol, einem Mercaptoalkohol oder einem aliphatischen Lactam. Gemäß der Lehre dieser Schrift lassen sich diese Zusammensetzungen zur Flexibilisierung von Epoxidharzen einsetzen. Zusätzlich zu den vorgenannten Bestandteilen sollen diese Zusammensetzungen noch Epoxidharze und einen Härter bzw. Beschleuniger enthalten. Derartige Gemische sollen sich als Klebstoffe, Klebefilme, Patches, Matrixharze, Lacke oder Dichtungsmassen verwenden lassen.

Die WO01/94492 beschreibt Kondensationsprodukte aus cyclischen Carbonsäureanhydriden von Dicarbonsäuren, Tricarbonsäureanhydriden oder Tetracarbonsäureanhydriden und difunktionellen Polyaminen, insbesondere Polyoxyalkylenaminen als Aufbaukomponenten für Epoxidharzzusammensetzungen. Die Kondensationsprodukte auf Basis von Tricarbonsäureanhydriden oder Tetracarbonsäureanhydriden zeichnen sich durch im Mittel mehr als eine Imidgruppe und Carboxylgruppe pro Molekül aus. Ggf. können noch Kondensationsprodukte aus tri- oder mehrfunktionellen Polyolen und/oder tri- oder mehrfunktionellen aminoterminierten Polymeren und cyclischen Carbonsäureanhydriden in den Zusammensetzungen enthalten sein. Zusätzlich enthalten diese Zusammensetzungen übliche kautschukmodifizierte Epoxidharze sowie flüssige und/oder feste Polyepoxydharze und übliche Härter und Beschleuniger und ggf. Füllstoffe und Rheologiehilfsmittel. Es wird vorgeschlagen, diese modifizierten Epoxidharzzusammensetzungen als schlagfeste, schlagschälfeste und schälfeste Klebstoffe im Fahrzeugbau und in der Elektronik einzusetzen, insbesondere da sie bei sehr tiefen Temperaturen sehr gute Schlag- und Schäl-Eigenschaften aufweisen und eine sehr gute Korrosionsbeständigkeit und Alterungsbeständigkeit der Klebung gewährleisten sollen.

JP 2000-313786 A beschreibt eine schlagfeste Acrylharz-Zusammensetzung enthaltend ein (Meth)acrylatpolymer als Komponente A und ein Elastomermodifiziertes Acrylatharz als Komponente B. Dabei soll die Komponente B als teilchenförmiges Material mit 0,2 bis 10 µm durchschnittlicher Teilchengröße als disperse Phase vorliegen, die mit einer kontinuierlichen Phase der Komponente A umgeben ist. Dabei soll das Verhältnis des Volumens der Komponente A zum Volumen der Komponente B 0,5 bis 4 betragen und mindestens ein Teil der Komponente A soll chemisch an einen Teil der Komponente B gebunden sein. Es wird angegeben, dass diese Harzzusammensetzungen eine verbesserte Schlagfestigkeit bei gleichzeitig gegebener guter Alterungsbeständigkeit aufweisen soll.

In ähnlicher Weise beschreibt JP 2000-319475 A eine schlagfeste Harzzusammensetzung aus einer (Meth)acrylatcopolymerkomponente A und einer modifizierten Polyurethan-Elastomer-Komponente B. Hier soll die Polyurethan-Elastomer-Komponente B als diskontinuierliche dispergierte Phase in der kontinuierlichen Phase A vorliegen, wobei die disperse Phase eine Struktur aufweist, die eine Mikrophasenseparation hat. Es soll hier wiederum zumindest ein Teil der Komponente A chemisch an einen Teil der Komponente B gebunden sein. Es wird vorgeschlagen, einen Acrylatsirup C unter Scherung anzupolymerisieren, so dass die Phasenseparation folgt. Diese Harzzusammensetzungen sollen eine verbesserte Schlagfestigkeit aufweisen, ohne die Alterungsbeständigkeit und Witterungsbeständigkeit zu verschlechtern.

EP 0270318 A2 beschreibt eine modifizierte Zusammensetzung für die Anwendung als Strukturklebstoff. Diese Klebstoff-Zusammensetzungen enthalten einen Flüssigkautschuk mit olefinisch ungesättigten Endgruppen, der mit einer Monoisocyanat-Komponente umgesetzt worden ist. Es wird vorgeschlagen, zur Herstellung dieser flüssigen Elastomeren Carboxyl-terminiertes Polybutadien oder ein Polybutadien-Acrylnitril- oder Polybutadien-Methacrylnitril-Styrol- Copolymer mit Glycidylmethacrylat umzusetzen und anschließend die entstandenen sekundären Hydroxylgruppen mit Monoisocyanat-Verbindungen umzusetzen. Derartig modifizierte flüssige Elastomere mit olefinischen Endgruppen werden dann mit olefinisch ungesättigten Monomeren, ausgewählt aus Acrylsäure-Estern, Acrylsäure, Styrol, substituierten Styrol, und freiradikalischen Initiatoren gemischt, um einen bei Raumtemperatur härtbaren Strukturklebstoff bereitzustellen. Es wird angegeben, dass derartige Klebstoff-Zusammensetzungen, im Vergleich zu anderen Strukturklebstoffen auf der Basis von Acrylatmonomeren, eine verbesserte Alterungsbeständigkeit und verbesserte Tieftemperatureigenschaften aufweisen.

WO 02/070619 beschreibt elastische (Meth)acrylatklebstoff-Zusammensetzungen mit hoher Bruchdehnung. Gemäß dieser Schrift sollen die Klebstoffzusammensetzungen mindestens ein monofunktionelles (Meth)acrylatmonomer A aufweisen, dessen Homopolymer oder Copolymer eine Glasübergangstemperatur zwischen 40°C und 140°C aufweist. Weiterhin soll die Zusammensetzung ein monofunktionelles (Meth)acrylatmonomer B mit der nachfolgenden Struktur enthalten:

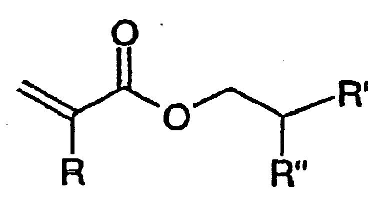

Hierin soll R Wasserstoff oder eine Methylgruppe sein, R' ist Wasserstoff oder C₁ bis C₃-Alkyl, insbesondere Wasserstoff oder Ethyl und R" soll eine C₃-C₂₀-Alkylgruppe oder eine Phenoxygruppe oder eine Alkoxygruppe sein. Als weitere Komponente soll ein Elastomer mit einem Molekulargewichtbereich zwischen 1000 und 9000 mit (meth)acrylatischen Gruppen in der Zusammensetzung anwesend sein. Diese Schrift gibt an, dass die dort offenbarten Zusammensetzungen besonders zum Kleben von Materialien mit unterschiedlichen thermischen Expansions-Koeffizienten geeignet sind, wie sie zum Beispiel in der Fahrzeugindustrie Einsatz finden. Exemplarisch genannt ist die Klebung von Seitenblechen von Trailern oder die Direktverglasung. Es wird angegeben, dass diese Zusammensetzungen eine sehr hohe Schlagfestigkeit bei tiefen Temperaturen aufweisen.

Nachteile der vorgenannten Klebstoffe auf Epoxid- oder (Meth)acrylat-Basis sind:
- hohe Rohstoffkosten,
- die notwendige arbeitshygienische Kennzeichnung (meistens mit Xi),
- bedingte Ölaufnahme,
- mangelnder Korrosionsschutz,
- mangelnde Alterungsbeständigkeit.

Es sind auch hochfeste Klebstoffe auf Kautschukbasis bekannt geworden. Die WO 96/23040 beschreibt einkomponentige, hitzehärtende Strukturklebstoffe auf der Basis von Flüssigkautschuken, die gegebenenfalls anteilig funktionelle Gruppen enthalten können, Festkautschuken, thermoplastischen Polymerpulvern und Schwefel sowie Vulkanisationsbeschleunigern. Diese Klebstoffe eignen sich zum Verkleben von Metallteilen. Es können Zugscherfestigkeiten von über 15 MPa bei gleichzeitiger hoher Bruchdehnung von über 15 % erhalten werden. Diese Klebstoffe sind im Wesentlichen frei von niedermolekularen Epoxidharzen und eignen sich insbesondere für den Einsatz im Rohbau in der Automobilindustrie.

Aus der WO99/03946 sind warm pumpbare, heißhärtende Massen auf Basis von Ethylen-Vinylacetat-Copolymeren (EVA), enthaltend mindestens ein festes EVA-Copolymer mit einem Erweichungspunkt über 50 °C, gemessen nach der Ring & Ball-Methode nach ASTM D 28, mindestens einen flüssigen reaktiven Weichmacher mit olefinisch ungesättigten Doppelbindungen und mindestens ein peroxidisches Vernetzungsmittel, bekannt. Nach den Angaben dieser Schrift eigenen sich diese Zusammensetzungen als Versiegelungsmittel von Fein- und Grobnähten im Fahrzeugbau. Bei Zusatz von Treibmitteln lassen sich diese auch als Unterfütterungsklebstoffe einsetzen. Die bevorzugten Einsatzgebiete sind im Rohbau bei der Fertigung von Automobilen.

WO02/4825 offenbart heißhärtende, reaktive Zusammensetzungen auf der Basis von natürlichen und/oder synthetischen olefinische Doppelbindungen enthaltenden Elastomeren auf der Basis von flüssigen Polyenen, und ggf. Festkautschuken. Das Vulkanisations-System besteht aus Schwefel und/der Metalloxiden und einem oder mehreren organischen Beschleunigern, die eine oder mehrere heterocyclische Verbindung(en) enthalten, die mindestens 2 Stickstoffatome im Ring haben. Diese Zusammensetzungen lassen sich unter Vermeidung bzw. starker Reduktion der Geruchsbelästigung durch Schwefel und Schwefelverbindungen vulkanisieren. Es wird angegeben, dass sich diese Zusammensetzungen als Klebstoffe, Dichtstoffe oder Beschichtungsmassen, insbesondere im Automobilbau eignen.
Aus der WO02/4825 sind heißhärtende reaktive Zusammensetzungen auf der Basis von natürlichen und/oder synthetischen olefinische Doppelbindungen enthaltenden flüssigen Elastomeren und Vulkanisationsmitteln, die neben herkömmlichen, flüssigen Polyenen mindestens ein flüssiges cis-1,4-Polyisopren mit einem Molekulargewicht zwischen 20 000 und 70 000 sowie ein Vulkanisationssystem aus Schwefel, Beschleunigern und Chinonoximen enthalten, bekannt. Diese Klebstoffe zeigen ein Plastisol-artiges Fließverhalten, so dass sie bei Raumtemperatur mit herkömmlichen Spritzanlagen applizierbar sind. Es wird angegeben, dass sich diese Zusammensetzungen als Nahtabdichtungs- und Versiegelungsmasse, als Unterfütterungsklebstoff sowie als Strukturklebstoff wie z. B. als Bördelnahtklebstoff eignen sollen.

Die hochfesten Klebstoffe des vorgenannten Standes der Technik auf Kautschukbasis sind in Ihren Eigenschaften bei tiefen Temperaturen verbesserungsbedürftig, sie weisen insbesondere bei tiefen Temperaturen keine elastischen und schlagzähen Eigenschaften auf, da sie, vermutlich aufgrund des hohen Vernetzungsgrades, bei tiefen Temperaturen zu stark verspröden.

Aufgabe der vorliegenden Erfindung war daher, hochfeste und gleichzeitig schlagzähe Klebstoffe bereitzustellen, die für die Anwendung im Automobilrohbau eingesetzt werden können und die nicht Epoxidharze oder (Meth)acrylatharze als wesentlichen Bestandteil enthalten, ohne die Verwendung teurer Spezialpolymerer oder Copolymerer.

Die erfindungsgemäße Lösung der Aufgabe ist den Patentansprüchen zu entnehmen, sie besteht im Wesentlichen in der Bereitstellung einer einkomponentigen, heißhärtenden reaktiven Zusammensetzung auf der Basis von natürlichen und/oder synthetischen olefinische Doppelbindungen enthaltenden Elastomeren und Vulkanisationsmitteln, die
a) mindestens ein flüssiges Polyen mit einem Molekulargewicht zwischen 400 und 80.000, vorzugsweise zwischen 800 und 25.000,
b) mindesten ein flüssiges Polybutadien mit 10 - 20 % vinyl 1,2-, 50 - 60 % trans 1,4-, 25 - 35 % cis 1,4- Doppelbindungen als Mikrostruktur und
c) ein Vulkanisationssystem aus Schwefel und Beschleunigern undloder ggf. Chinonoximen enthält.

Unter "flüssig" wird hier "flüssig bei Raumtemperatur (22°C)" verstanden.

Ein weiterer Gegenstand der vorliegenden Erfindung ist die Verwendung der vorgenannten heißhärtenden, reaktiven Zusammensetzungen als einkomponentiger Klebstoff, Dichtstoff oder Beschichtungsmasse oder Versiegelungsmasse im Automobilrohbau.

Das oder die flüssigen Polyen(e) oder Elastomere a) enthalten dabei pro Molekül mindestens eine olefinisch ungesättigte Doppelbindung. Sie können dabei aus der folgenden Gruppe der Homo- und/oder Copolymeren ausgewählt werden:

Polybutadiene, insbesondere die 1,3- und 1,2-Poly-butadiene, Polybutene, Polyisobutylene, 1,4- und 3,4-Polyisoprene, Styrol-Butadien-Copolymere. Butadien-Acrylnitril-Copolymere, wobei eines oder mehrere dieser Polymeren endständige und/oder (statistisch verteilte) seitenständige funktionelle Gruppen haben können. Beispiele für derartige funktionelle Gruppen sind Hydroxy-, Amino-, Carboxyl-, Carbonsäureanhydrid- oder Epoxygruppen. Das Molekulargewicht dieser Flüssigkautschuke ist typischerweise unterhalb von 80 000 und oberhalb von 400, vorzugsweise zwischen 800 und 25 000. Der Anteil an Flüssigkautschuk an der Gesamtzusammensetzung hängt dabei von der gewünschten Rheologie der ungehärteten Zusammensetzung und der erwünschten mechanischen Steifigkeit oder Festigkeit des Verbundes und gegebenenfalls den akustischen Dämpfungseigenschaften der ausgehärteten Zusammensetzung ab. Der Anteil an flüssigem Kautschuk bzw. Elastomer variiert normalerweise zwischen 2 und 55 Gew.% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in Bezug auf die restlichen Doppelbindungen einzusetzen. Außerdem können als Copolymere sowohl Blockcopolymere als auch solche mit statistischer Verteilung der Comonomeren eingesetzt werden. Zur Erzielung optimaler Haftung auf den diversen Substraten wird in den besonders bevorzugten Formulierungen anteilig eine Flüssigkautschukkomponente mit Hydroxylgruppen, Carboxylgruppen bzw. Säureanhydridgruppen eingesetzt. Der Anteil an carboxylgruppenhaltigem Flüssigkautschuk kann 0 bis 25 Gew.%, vorzugsweise 1 bis 15 und ganz besonders bevorzugt 3 bis 10 Gew.% betragen.

Ein wesentlicher Bestandteil der erfindungsgemäßen Zusammensetzungen sind flüssige Polybutadiene, vorzugsweise mit enger Molekulargewichtsverteilung, die durch anionische Polymerisation herstellbar sind. Diese niedermolekularen flüssigen Polybutadiene enthalten in der Polymerkette drei Strukturtypen: vinylische 1,2-Doppelbindungen, cis 1,4-Doppelbindungen und trans 1,4-Doppelbindungen, wobei diese flüssigen Polymeren 10 bis 20 % vinylische 1,2-Doppelbindungen, 50 bis 60 % trans 1,4-Doppelbindungen und 25 bis 35 % cis 1,4-Doppelbindungen in ihrer Mikrostruktur aufweisen. Die Molekulargewichte dieser flüssigen Butadiene liegen zwischen 2.000 und 12.000, vorzugsweise zwischen 5.000 und 9.000 (zahlenmittleres Molekulargewicht). Aufgrund ihrer engen Molekulargewichtsverteilung weisen sie eine sehr niedrige Viskosität zwischen 3 und 15 Pa·s bei 25°C auf. Sie können gegebenenfalls, bedingt durch die anionische Polymerisation, eine oder zwei terminale bzw. eine oder mehrere statistisch verteilte Hydroxylgruppe(n) pro Molekül aufweisen. Alternativ können diese Polymere auch eine oder zwei terminale bzw. eine oder mehrere statistisch verteilte Carboxylgruppe(n) aufweisen. Der Vorteil des Einsatzes dieser flüssigen Polybutadiene mit enger Molekulargewichtsverteilung ist ein höheres Molekulargewicht im Vergleich zu üblichen flüssigen Polybutadienen bei trotzdem niedriger Viskosität.

Zusätzlich kann die erfindungsgemäße Klebstoff-Zusammensetzung auch noch einen Anteil an Festkautschuken enthalten. Geeignete Festkautschuke haben im Vergleich zu den Flüssigkautschuken ein signifikant höheres Molekulargewicht (MW=100000 oder höher). Beispiele für geeignete Kautschuke sind Polybutadien, vorzugsweise mit einem sehr hohen Anteil an cis-1,4-Doppelbindungen (typischerweise über 95%), Styrol-Butadien-Kautschuk, Butadien-Acrylnitril-Kautschuk, synthetischer oder natürlicher Isoprenkautschuk, Polycyclooctenamer, Butylkautschuk oder Polyurethankautschuk. Der Anteil an Festkautschuk kann dabei bis zu 15 Gew.% betragen, vorzugsweise liegt er zwischen 0 und 12 Gew.% und ganz besonders bevorzugt zwischen 0 und 9 Gew.%.

Weiterhin enthalten die erfindungsgemäßen einkomponentigen, heißhärtenden reaktiven Zusammensetzungen ein Vulkanisationssystem aus Schwefel und Beschleunigern und/oder ggf. Chinonoximen.

Für das Vulkanisationssystem eignen sich eine Vielzahl von Vulkanisationsmitteln in Kombination mit elementarem Schwefel, aber auch Vulkanisationssysteme ohne freien Schwefel. Zu letzteren zählen die Vulkanisationssysteme auf der Basis von Thiuramdisulfiden, organischen Peroxiden, polyfunktionellen Aminen, Chinonen, p-Benzochinondioxim, p-Nitrosobenzol und Dinitrosobenzol oder auch die Vernetzung mit (blockierten) Diisocyanaten. Ganz besonders bevorzugt sind jedoch Vulkanisationssysteme auf der Basis von elementarem Schwefel und organischen Vulkanisationsbeschleunigern sowie Zinkverbindungen. Der pulverförmige Schwefel wird dabei in Mengen von 4 bis 25 Gew.%, bezogen auf die Gesamtzusammensetzung eingesetzt, besonders bevorzugt werden Mengen zwischen 5 und 15 Gew.% eingesetzt. Als organische Beschleuniger eignen sich Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger, ganz besonders bevorzugt wird Dibenzothiazyldisulfid (MBTS), 2-Mercaptobenzthiazol (MBT), dessen Zinksalz (ZMBT), Zinkdibenzyldithiocarbamat (ZBEC), N-Cyclohexylbenzodithiazylsulfenamid (CBS) oder Diphenylguanidin. Die Beschleuniger werden in Mengen zwischen 0,25 und 8,0 Gew.%, besonders bevorzugt zwischen 0,4 und 6 Gew.%, verwendet. Für die Erzielung besonders hoher Temperatur- und Reversionsfestigkeit des Klebstoffes kann das Vulkanisationsgemisch auch bifunktionelle Vernetzer enthalten. Konkrete Beispiele sind Vernetzer auf Basis von bifunktionellen Dithiocarbamaten wie z.B. das 1,6-bis(N,N-dibenzylthiocarbamoyldithio)-hexan. Derartige Vernetzer in Mengen zwischen 0 und 2, vorzugsweise zwischen 0 und 1 Gew.% in den Zusammensetzungen enthalten.

Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 0,5 und 10 Gew.%, vorzugsweise zwischen 2 und 8 Gew.%. Zusätzlich können weitere typische Kautschuk-Vulkanisationshilfsmittel wie Fettsäuren (z.B. Stearinsäure) in der Formulierung vorhanden sein.

Erfingdungsgemäß kann auch ein kombiniertes Vulkanisationssystem aus elementarem Schwefel, den oben genannten organischen Beschleunigern und Chinondioximen eingesetzt werden. Beispielhaft erwähnt sei p-Benzochinondioxim. Es können jedoch auch andere Chinondioxime in Kombination mit den vorgenannten Schwefelsystemen verwendet werden. Das Vulkanisationssystem kann auch nur aus Chinondioximen bestehen.

Zusätzlich können die erfindungsgemäßen Zusammensetzungen für Kautschukmischungen übliche Füllstoffe, Beschleuniger, Vernetzungsmittel wie Schwefel und/oder Peroxide, Antioxidantien, Co-Aktivatoren und weitere Katalysatoren, Ruße, Treibmittel, Öle, Alterungsschutzmittel, Fasern ggf. auch Graphit, Rheologiehilfsmittel, Haftungsvermittler, Pigmente und thermoplastische Polymere enthalten.

Die erfindungsgemäßen Zusammensetzungen können weiterhin feinverteilte thermoplastischen Polymerpulver enthalten. Diese sollten eine Glasübergangstemperatur im Bereich zwischen -80°C und 50°C aufweisen. Beispiele für geeignete thermoplastische Polymere sind Polypropylen, Polyethylen, thermoplastische Polyurethane, (Meth)acrylatcopolymere, Styrolcopolymere, Polyvinylchlorid, Polyvinylacetal sowie Polyvinylacetat und dessen Copolymere, insbesondere Ethylenvinylacetat (EVA). Obwohl die Teilchengröße bzw. Teilchengrößenverteilung des thermoplastischen Polymerpulvers nicht besonders kritisch ist, sollte die mittlere Teilchengröße unter 1 mm, vorzugsweise unter 350 µm, besonders bevorzugt zwischen 100 und 20 µm liegen. Wenn thermoplastische Polymerpulver mitverwendet werden, liegt ihr Anteil an der Gesamtformulierung zwischen 1 und 20 Gew.%, vorzugsweise zwischen 5 und 15 Gew.%.

Die Füllstoffe können aus einer Vielzahl von Materialien ausgewählt werden, insbesondere sind hier zu nennen Kreiden, natürliche oder gemahlene Calciumcarbonate, Calcium-Magnesiumcarbonate, Silikate, Talkum, Schwerspat sowie Ruß. Es kann ggf. zweckmäßig sein, dass zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Die erfindungsgemäßen Zusammensetzungen können noch zwischen 0 und 8 Gew.%, vorzugsweise zwischen 1 und 6 Gew.% an Calciumoxid enthalten. Der Gesamtanteil an Füllstoffen in der Formulierung kann zwischen 10 und 80 Gew.% variieren, der Vorzugsbereich liegt zwischen 20 und 65 Gew.%.

Gegen den thermischen, thermooxidativen oder Ozon - Abbau der erfindungsgemäßen Zusammensetzungen können konventionelle Stabilisatoren oder Alterungsschutzmittel, wie z.B. sterisch gehinderte Phenole (beispielsweise 2,2-Methylen-bis-(4-methyl-6-tert.-butylphenol)) oder Aminderivate eingesetzt werden, typische Mengenbereiche für diese Stabilisatoren sind 0 bis 2 Gew.%.

Obwohl die Rheologie der erfindungsgemäßen Zusammensetzungen auch durch die Auswahl der Füllstoffe und das Mengenverhältnis der niedermolekularen Flüssigkautschuke in den gewünschten Bereich gebracht werden kann, können konventionelle Rheologiehilfsmittel wie z.B. pyrogene Kieselsäuren, Bentone oder fibrillierte oder Pulp-Kurzfasern im Bereich zwischen 0,1 und 7% oder auch hydrierte Ricinusöl-Derivate - bekannt z.B. unter dem Handelsnamen Rilanit (Fa. Cognis) - zugesetzt werden. Außerdem können weitere konventionelle Hilfs- und Zusatzmittel in den erfindungsgemäßen Zusammensetzungen Verwendung finden.

Zum Erzielen der Aufschäumung während des Härtungsvorganges können prinzipiell alle gängigen Treibmittel verwendet werden, vorzugsweise jedoch organische Treibmittel aus der Klasse der Azoverbindungen, N-Nitrosoverbindungen, Sulfonylhydrazide oder Sulfonylsemicarbazide. Für die *erfindungsgemäß* zu *verwendenden* Azoverbindungen *seien beispielhaft* das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis-(benzolsulfonsäurehydrazid), das Diphenylsulfon-3,3'-disulfohydrazid oder das Benzol-1,3-disulfohydrazid und aus der Klasse der Semicarbazide das p-Toluolsulfonylsemicarbazid genannt.

An die Stelle der vorgenannten Treibmittel können auch die so genannten expandierbaren Mikrohohlkugeln ("expandable microspheres"), d.h. nicht expandierte thermoplastische Polymerpulver treten, die mit niedrigsiedenden organischen Flüssigkeiten getränkt bzw. gefüllt sind. Derartige "Microspheres" sind beispielsweise in der EP-A-559254, der EP-A-586541 oder der EP-A-594598 beschrieben. Obwohl nicht bevorzugt, können auch bereits expandierte Mikrohohlkugeln verwendet bzw. mit verwendet werden. Gegebenenfalls können diese expandierbaren/expandierten Mikrohohlkugeln in beliebigem Mengenverhältnis mit den oben genannten "chemischen" Treibmitteln kombiniert werden. Die chemischen Treibmittel werden in schäumbaren Zusammensetzungen in Mengen zwischen 0,1 und 3 Gew.%, vorzugsweise zwischen 0,2 und 2 Gew.%, die Mikrohohlkugeln zwischen 0,1 und 4 Gew.%, vorzugsweise zwischen 0,2 und 2 Gew.% verwendet.

Obwohl die erfindungsgemäßen Zusammensetzungen aufgrund des bevorzugten Gehaltes an Flüssigkautschuk mit funktionellen Gruppen in der Regel bereits eine sehr gute Haftung auf den Substraten haben, können, falls erforderlich, Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid enthaltende Copolymere. Auch der Zusatz von Polyepoxydharzen in geringen Mengen kann bei manchen Substraten die Haftung verbessern. Hierfür werden dann jedoch vorzugsweise die festen Epoxidharze mit einem Molekulargewicht von über 700 in fein gemahlener Form eingesetzt. Falls Klebrigmacher bzw. Haftvermittler eingesetzt werden, hängt deren Art und Menge von der Polymerzusammensetzung sowie dem Substrat, auf welches die Zusammensetzung appliziert wird, ab. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.% verwendet.

Vorzugsweise sind die erfindungsgemäßen Zusammensetzungen frei von Weichmachern und Extenderölen. Es kann jedoch notwendig sein, die Rheologie der ungehärteten Zusammensetzung und/oder die mechanischen Eigenschaften der gehärteten Zusammensetzung durch Zugabe von sog. Extenderölen, d.h. aliphatischen, aromatischen oder naphtenischen Ölen zu beeinflussen. Vorzugsweise geschieht diese Beeinflussung zwar durch zweckmäßige Auswahl der niedrigmolekularen Flüssigkautschuke oder durch die Mitverwendung von niedermolekularen Polybutenen oder Polyisobutylenen. Falls Extenderöle eingesetzt werden, werden Mengen im Bereich zwischen 2 und 15 Gew.% verwendet.

Zur Erzielung hochfester, schlagschälfester und schälfester Kautschukmischungen enthalten die erfindungsgemäßen Zusammensetzungen vorzugsweise (Angabe in Gew.%):

| | allgemeine Zusammensetzung | bevorzugte Zusammensetzung | besonders bevorzugte Zusammensetzung |
|---|---|---|---|
| Festkautschuk | 0-15% | 0-12% | 0-9.0% |
| Polybutadien flüssig (MW = 5000), (10 - 20 % vinyl 1,2-, 50 - 60 % trans 1,4-, 25 - 35 % cis 1,4) | 2-50% | 5-42% | 8-36% |
| Polybutadien mit aktiven Carboxylgruppen (MW = 1000-10.000 g/mol) | 0-25% | 1-15% | 3-10% |
| Schwefel | 4-25% | 5-15% | 7.5-12.5% |
| Beschleuniger | 0.25-8% | 0,4-6% | 0,5 - 3,5 % |
| bifunktionaler Vulkanisationsvernetzer | 0-2% | 0-1% | 0-0.5% |
| Zinkoxid | 0.5-10% | 2-8% | 3-7% |
| Phenolharz | 0-8% | 0-6% | 0-3% |
| Dinatriumsalz des Hexamethylen-1,6-bis(thiosulfat) | 0-2.5% | 0.1-1.8% | 0.4-1.3% |
| Antioxidans | 0-2,0% | 0.1-1,0% | 0,2 - 0,7 % |
| Calciumoxid | 0-8% | 1-6% | 2,5 - 5,5 % |
| Ruß | 0-4% | 0.1-2% | 0,2-1% |
| Calciumcarbonat | 10-45% | 15-40% | 25-36% |
| Calciumcarbonat, gecoatet | 0-30% | 5-18% | 3-12% |

Daneben können, wie vorstehend genannt, weitere Füllstoffe wie Graphit, Fasern, Talkum, Silikate, Tonerden, weitere typische Beschleuniger, Vernetzungsmittel wie Peroxide, andere Antioxidantien, Co-Aktivatoren und weitere Katalysatoren, Treibmittel, Öle, Alterungsschutzmittel mit verwendet werden. Ggf. können auch Rheologiehilfsmittel, Haftungsvermittler, Pigmente und thermoplastische Polymere in der Zusammensetzung enthalten sein. Die Summe der Bestandteile der Zusammensetzung ergänzt sich in jedem Falle zu 100 %.

Die erfindungsgemäßen heißhärtenden, reaktiven, einkomponentigen Klebstoffe können wie die bisher bekannten Klebstoffe auf Kautschukbasis im Rohbau eingesetzt werden, beispielsweise für Bördelnahtverklebungen oder überlappende Verklebungen. Sie können auf geölte Bleche, wie sie im Automobilrohbau eingesetzt werden, aufgetragen werden und die Bauteile werden anschließend gefügt. Die erfindungsgemäßen Zusammensetzungen benötigen in der Regel keine Vorhärtungsmechanismen wie Induktionsheizung, Rohbauöfen oder IR-Strahler zur Vorhärtung, da sie wie die bisher bekannten Kautschukzusammensetzungen wäscherbeständig sind. Gegenüber den bisher bekannten Kautschukzusammensetzungen weisen sie eine sehr viel höhere Elastizität auf und sind in der Lage, hohe Energie in Form von Schlagschäl-Arbeit bzw. Schlagschäl-Energie in der Klebstoff-Fuge aufzunehmen. Insbesondere weisen die erfindungsgemäßen Kautschukzusammensetzungen sehr gute Schlagschäl-Eigenschaften im ausgehärteten Zustand auf. Diese Eigenschaften sind erwünscht, damit die strukturell geklebten Bauteile auch im Falle eines Unfalls den modernen Sicherheitsanforderungen (Crash-Verhalten) im Fahrzeugbau entsprechen. Weil die erfindungsgemäßen Zusammensetzungen ohne teure Spezialpolymere oder Copolymere formuliert werden können, lassen sich diese besonders kostengünstig fertigen.

Die erfindungsgemäßen Zusammensetzungen können in sich bekannter Weise in Mischaggregaten mit hoher Scherwirkung hergestellt werden, hierzu gehören z.B. Kneter, Planetenmischer, Innenmischer, so genannte "Banbury-Mischer" und ähnliche dem Fachmann bekannte Mischaggregate.

In den nachfolgenden Ausführungsbeispielen soll die Erfindung näher erläutert werden, wobei die Auswahl der Beispiele keine Beschränkung des Umfanges des Erfindungsgegenstandes darstellen soll.

### Beispiele:

Die nachfolgend aufgeführten Klebstoffzusammensetzungen wurden durch Mischen der Bestandteile einem evakuierbaren Laborkneter hergestellt.

### Beispiel 1 (Vergleich):

| | |
|---|---|
| Polybutadien cis-1,4- (fest) | 2,80 |
| Calciumoxid | 2,50 |
| 2,2-Methylen-bis-(4-methyl-6-tert.-butylphenol) | 0,50 |
| Ruß | 0,50 |
| Zinkoxid | 3,00. |
| gefälltes Calciumcarbonat | 20,00 |
| niedermolekulares Polybutadienöl (MW = 1800), vinyl 50 % | 19,00 |
| niedermolekulares stereospezifisches Polybutadienöl ²⁾ | 7,55 |
| Schwefel | 6,50 |
| ZMBT | 2,50 |
| Polybutadien mit aktiven Carboxylgruppen (MW = 2100) | 10,00 |
| Calciumcarbonat, gecoatet mit Stearat | 15,00 |
| MBTS | 0,95 |
| Dinatriumsalz des Hexamethylen-1,6-bis(thiosulfat) | 0,50 |
| Mikrohohlkugeln | 0,20 |
| Polyvinylacetat, EVA-Copolymer, T_{g} ca. 40 °C | 8,50 |

### Beispiel 2 (erfindungsgemäß):

| | |
|---|---|
| Polybutadien cis-1,4- (fest) | 2,80 |
| Calciumoxid | 4,20 |
| 2,2-Methylen-bis-(4-methyl-6-tert.-butylphenol) | 0,50 |
| Ruß | 0,50 |
| Zinkoxid | 4,00 |
| gefälltes Calciumcarbonat | 31,22 |

| | |
|---|---|
| Calciumcarbonat, gecoatet mit Stearat | 6,65 |
| niedermolekulares Polybutadienöl ¹⁾ | 30,58 |
| MBTS | 0,95 |
| Schwefel | 10,00 |
| bifunktioneller Vernetzer zur Vulkanisation | 0,15 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |

### Beispiel 3 (erfindungsgemäß):

| | |
|---|---|
| Polybutadien cis-1,4- (fest) | 2,80 |
| Calciumoxid | 4,20 |
| 2,2-Methylen-bis-(4-methyl-6-tert.-butylphenol) | 0,50 |
| Ruß | 0,50 |
| Zinkoxid | 4,00 |
| gefälltes Calciumcarbonat | 29,49 |
| Calciumcarbonat, gecoatet mit Stearat | 6,65 |
| niedermolekulares Polybutadienöl¹⁾ | 30,58 |
| MBTS | 1,20 |
| Schwefel | 11,50 |
| bifunktioneller Vernetzer zur Vulkanisation | 0,15 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |

### Beispiel 4 (erfindungsgemäß):

| | |
|---|---|
| Polybutadien cis-1,4- (fest) | 5,09 |
| Calciumoxid | 4,20 |
| 2,2-Methylen-bis-(4-methyl-6-tert.-butylphenol) | 0,50 |
| Ruß | 0,50 |
| Zinkoxid | 4,00 |
| gefälltes Calciumcarbonat | 31,37 |
| Calciumcarbonat, gecoatet mit Stearat | 6,65 |
| niedermolekulares Polybutadienöl ¹⁾ | 22,04 |
| MBTS | 1,20 |
| Schwefel | 11,50 |
| bifunktioneller Vernetzer zur Vulkanisation | 0,15 |
| Dinatriumsalz des Hexamethylen-1 ,6-bis(thiosulfat) | 0,95 |
| Phenolharz | 2,50 |
| Polybutadien mit aktiven Carboxylgruppen (MW 2100) | 5,00 |
| Polycyclooctenamer | 5,00 |

### Anmerkung:

1) MW = 5000, Mikrostruktur: 10 - 20 % vinyl- 1,2-,50 - 60 % trans 1,4-, 25 - 35 % cis 1,4- Doppelbindungen
2) MW = 1800, vinyl- Doppelbindungen 50 %

Mit den vorbeschriebenen Kautschukzusammensetzungen der Beispiele 1 bis 4 wurden Prüfkörper aus Stahlblech für die Bestimmung der Zugscherfestigkeit - Abmessungen der Klebefuge 25x12,5x0,2 mm - sowie der Schlagschälfestigkeit (impact peel energy) angefertigt. Dabei die Prüfkörper zum Aushärten der Ktebstoffmischung für 30 Minuten bei 180°C im Umlufttrockenschrank ausgehärtet. Die Messergebnisse der Zugscherfestigkeit bei Raumtemperatur sowie der Schlagschälfestigkeit nach ISO 11343 bei Raumtemperatur und -30°C sind in der nachfolgenden Tabelle aufgeführt:

| **Beispiel** | **Zugscherfestigkeit** | **Impact peel Energy,** | **Impact peel Energy,** |
|---|---|---|---|
| | **[MPa]** | **RT** | **-30 °C** |
| 1 | 16,2 MPa | 3 J | 1,5 J |
| 2 | 16,3 MPa | 29,5 J | 2,0 J |
| 3 | 21,4 MPa | 21,0 J | 3,7 J |
| 4 | 23,2 MPa | 22,5 J | 4,7 J |

Aus den Zugscherfestigkeiten und den Schlagschälarbeiten der vorstehenden Tabelle ist deutlich ersichtlich, dass die erfindungsgemäßen Klebstoffzusammensetzungen auf Basis flüssiger Kautschuke gegenüber vergleichbaren Kautschukzusammensetzungen des Standes der Technik sowohl höhere Zugscherfestigkeiten als auch deutlich höhere Schlagschälarbeiten gewährleisten, insbesondere bei Raumtemperatur aber auch bei tiefen Temperaturen bis zu -30°C. Diese höheren Schlagschälarbeiten sind ein wesentliches Kriterium für den Fahrzeugbau, da derartige Klebungen im Falle einer stoßartigen Belastung bei Unfällen sehr viel mehr Energie aufnehmen können.

## Patentansprüche

1. Einkomponentige, heißhärtende reaktive Zusammensetzung auf der Basis von natürlichen und/oder synthetischen olefinische Doppelbindungen enthaltenden Elastomeren und Vulkanisationsmitteln, **dadurch gekennzeichnet, dass** sie
a) mindestens ein flüssiges Polyen mit einem Molekulargewicht zwischen 400 und 80.000, vorzugsweise zwischen 800 und 25.000,
b) mindesten ein flüssiges Polybutadien mit 10 - 20 % vinyl 1,2-, 50 - 60 % trans 1,4-, 25 - 35 % cis 1,4- Doppelbindungen als Mikrostruktur und
c) ein Vulkanisationssystem aus Schwefel und Beschleunigern und/oder ggf. Chinonoximen
enthält.

2. Einkomponentige, heißhärtende reaktive Zusammensetzung nach Anspruch 1 **gekennzeichnet durch** zusätzlichen Gehalt an mindestens einem Festkautschuk aus der Gruppe cis-1,4-Polybutadien, Styrol-Butadien-Kautschuk, synthetischer Isoprenkautschuk, Naturkautschuk, Ethylen-Propylen-Dien-Kautschuk (EPDM), Polycyclooctenamer, Nitrilkautschuk, Butylkautschuk, Acrylkautschuk oder Polychloropren.

3. Einkomponentige, heißhärtende reaktive Zusammensetzung nach mindestens einem der vorhergehenden Ansprüche, **dadurch gekennzeichnet, dass** das flüssige Polybutadien b) ein Molekulargewicht (Mn) zwischen 2 000 und 12 000, vorzugsweise zwischen 5 000 und 9 000 aufweisen.

4. Einkomponentige, heißhärtende reaktive Zusammensetzung nach mindestens einem der vorhergehenden Ansprüche, **gekennzeichnet durch** zusätzlichen Gehalt an mindestens einem thermoplastischen Polymerpulver.

5. Heißhärtende Zusammensetzung nach mindestens einem der vorhergehenden Ansprüche, **dadurch gekennzeichnet, dass** zur Härtung ein Vulkanisationssystem aus Schwefel, organischen Vulkanisationsbeschleunigem und Zinkverbindungen verwendet wird.

6. Heißhärtende Zusammensetzung nach mindestens einem der vorhergehenden Ansprüche, **dadurch gekennzeichnet, dass** das Vulkanisationssystem aus 4 Gew.% bis 25 Gew.%, vorzugsweise 5 Gew.% bis 15 Gew.% pulverförmigem Schwefel, 0,25 Gew.% bis 8 Gew.%, vorzugsweise 0,4 Gew.% bis 6 Gew.% organischem Beschleuniger und 0,5 Gew.% bis 10 Gew.%, vorzugsweise 2 Gew.% bis 8 Gew.% Zinkverbindungen, vorzugsweise Zinkoxid besteht, wobei die Gew.% auf die Gesamtzusammensetzung bezogen sind.

7. Heißhärtende Zusammensetzung nach mindestens einem der vorhergehenden Ansprüche, **dadurch gekennzeichnet, dass** das Vulkanisationssystem zusätzlich 0 bis 2 Gew.% eines bifunktionellen Vulkanisationsvernetzers enthält.

8. Heißhärtende Zusammensetzung nach Anspruch 7, **dadurch gekennzeichnet**, als bifunktioneller Vulkanisationsvernetzer bifunktionelle Dithiocarbamate, insbesondere das 1,6-bis(N,N-dibenzylthiocarbamoyldithio)-hexan verwendet wird.

9. Zusammensetzung nach mindestens einem der vorhergehenden Ansprüche, **dadurch gekennzeichnet, dass** sie zusätzlich Füllstoffe, Rheologiehilfsmittel, Extenderöle, Treibmittel, Pigmente, Haftvermittler und/oder Alterungsschutzmittel enthält.

10. Zusammensetzung nach mindestens einem der vorhergehenden Ansprüche, enthaltend
- Festkautschuk: 0-15 Gew.%, vorzugsweise 0-12 Gew.%,
- Polybutadien flüssig mit 10 - 20 % vinyl- 1,2-, 50 - 60 % trans 1,4-, 25 - 35 % und cis 1,4- Doppelbindungen: 2 - 50 % Gew.%, vorzugsweise 5-42 Gew.%.
- Polybutadien mit Carboxylgruppen: 0 - 25 % Gew.%, vorzugsweise 1-15 Gew.%,
- Schwefel: 4-25 Gew.%, vorzugsweise 5 - 15 % Gew.%,
- Beschleuniger: 0,25 - 8,0 Gew.%, vorzugsweise 0,4 - 6 Gew.%,
- bifunktioneller Vulkanisationsvernetzer: 0-2 Gew.%, vorzugsweise 0-1 Gew.%,
- Zinkoxid: 0.5-10 Gew.%, vorzugsweise 2-8 Gew.%,
- Phenolharz: 0-8 Gew.%, vorzugsweise 0-6 Gew.%,
- Dinatriumsalz des Hexamethylen-1,6-bis(thiosulfat): 0 - 2,5 Gew.%, vorzugsweise 0,1 - 1,8 Gew.%,
- Antioxidans: 0-2 Gew.%, vorzugsweise 0,1 - 1,0 Gew.%,
- Calciumoxid: 0-8 Gew.%, vorzugsweise 1-6 Gew.%,
- Ruß: 0-4 Gew.%, vorzugsweise 0,1 - 2 Gew.%,
- Calciumcarbonat, nicht gecoatet: 10-45 Gew.%, vorzugsweise 15 - 40 Gew.%,
- Calciumcarbonat, gecoatet: 0 - 30 % Gew.%, vorzugsweise 5-18 Gew.%,
wobei sich die Summe der Bestandteile der Zusammensetzung zu 100 % ergänzt.

11. Verwendung der Zusammensetzung nach mindestens einem der vorhergehenden Ansprüche als einkomponentiger Klebstoff, Dichtstoff oder Beschichtungsmasse im Automobilrohbau.

## Claims

1. A single-component, high-temperature-curing reactive composition based on natural and/or synthetic elastomers containing olefinic double bonds and on vulcanizing agents, wherein it contains
a) at least one liquid polyene having a molecular weight between 400 and 80,000, by preference between 800 and 25,000;
b) at least one liquid polybutadiene having 10-20% vinyl-1,2, 50-60% trans-1,4, 25-35% cis-1,4 double bonds as a microstructure; and
c) a vulcanizing system of sulfur and accelerators and/or, if applicable, quinone oximes.

2. The single-component, high-temperature-curing reactive composition according to Claim 1, having an additional content of at least one solid rubber from the group of cis-1,4-polybutadiene, styrene-butadiene rubber, synthetic isoprene rubber, natural rubber, ethylene-propylene-diene rubber (EPDM), polycyclooctenamer, nitrile rubber, butyl rubber, acrylic rubber, or polychloroprene.

3. The single-component, high-temperature-curing reactive composition according to at least one of the preceding claims, wherein the liquid polybutadiene b) has a molecular weight (Mn) between 2,000 and 12,000, by preference between 5,000 and 9,000.

4. The single-component, high-temperature-curing reactive composition according to at least one of the preceding claims, having an additional content of at least one thermoplastic polymer powder.

5. The high-temperature-curing composition according to at least one of the preceding claims, wherein a vulcanizing system of sulfur, organic vulcanization accelerators, and zinc compounds is used for curing.

6. The high-temperature-curing composition according to at least one of the preceding claims, wherein the vulcanizing system consists of 4 wt% to 25 wt%, by preference 5 wt% to 15 wt%, powdered sulfur, 0.25 wt% to 8 wt%, by preference 0.4 wt% to 6 wt%, organic accelerator, and 0.5 wt% to 10 wt%, by preference 2 wt% to 8 wt%, zinc compounds, by preference zinc oxide, the wt% being based on the total composition.

7. The high-temperature-curing composition according to at least one of the preceding claims, wherein the vulcanizing system additionally contains 0 to 2 wt% of a bifunctional vulcanization crosslinker.

8. The high-temperature-curing composition according to Claim 7, wherein bifunctional dithiocarbamates, in particular 1,6-bis(N,N-dibenzylthiocarbamoyldithio)hexane, is used as a bifunctional vulcanization crosslinker.

9. The composition according to at least one of the preceding claims, wherein it additionally contains fillers, rheology adjuvants, extender oils, blowing agents, pigments, adhesion promoters, and/or aging protection agents.

10. The composition according to at least one of the preceding claims, containing
- solid rubber: 0 - 15 wt%, by preference 0-12 wt%;
- liquid polybutadiene with 10-20% vinyl-1,2, 50-60% trans-1,4, and 25-35% cis-1,4 double bonds: 2 - 50 wt%, by preference 5 - 42 wt%;
- polybutadiene having carboxyl groups: 0 - 25 wt%, by preference 1 - 15 wt%;
- sulfur: 4 - 25 wt%, by preference 5 - 15 wt%;
- accelerator: 0.25 - 8.0 wt%, by preference 0.4 - 6 wt%;
- bifunctional vulcanization crosslinker: 0 - 2 wt%, by preference 0 - 1 wt%;
- zinc oxide: 0.5 - 10 wt%, by preference 2-8 wt%;
- phenol resin: 0 - 8 wt%, by preference 0 - 6 wt%;
- disodium salt of hexamethylene-1,6-bis(thiosulfate): 0 - 2.5 wt%, by preference 0.1 - 1.8 wt%;
- antioxidant: 0 - 2 wt%, by preference 0.1 - 1.0 wt%;
- calcium oxide: 0 - 8 wt%, by preference 1 - 6 wt%;
- carbon black: 0 - 4 wt%, by preference 0.1-2 wt%;
- calcium carbonate, uncoated: 10-45 wt%, by preference 15-40 wt%;
- calcium carbonate, coated: 0-30 wt%, by preference 5-18 wt%,
the sum of the constituents of the composition adding up to 100%.

11. Use of the composition according to at least one of the preceding claims as a single-component adhesive, sealant, or coating compound in automobile body manufacture.

## Revendications

1. Composition réactive à un seul composant, durcissant à chaud, à base d'agents de vulcanisation et d'élastomères naturels et/ou synthétiques contenant des doubles liaisons oléfiniques, **caractérisée en ce qu'**elle contient
a) au moins un polyène liquide dont le poids moléculaire se situe entre 400 et 80.000, de préférence entre 800 et 25.000 ;
b) au moins un polybutadiène liquide comprenant, à titre de microstructure, des doubles liaisons vinyle 1,2 à concurrence de 10 à 20 %, trans 1,4 à concurrence de 50 à 60 %, cis 1,4 à concurrence de 25 à 35 % ; et
c) un système de vulcanisation de soufre et d'accélérateurs et/ou le cas échéant de quinonoximes.

2. Composition réactive à un seul composant, durcissant à chaud selon la revendication 1, **caractérisée par** une teneur supplémentaire en au moins un caoutchouc solide choisi parmi le groupe du cis-1,4 polybutadiène, du caoutchouc de styrène-butadiène, du caoutchouc synthétique d'isoprène, du caoutchouc naturel, du caoutchouc d'éthylène-propylène-diène (EPDM), du polycycloocténamère, du caoutchouc nitrile, du caoutchouc butyle, du caoutchouc acrylique ou du polychloroprène.

3. Composition réactive à un seul composant, durcissant à chaud selon au moins une des revendications précédentes, **caractérisée en ce que** le polybutadiène liquide b) présente un poids moléculaire (Mn) entre 2000 et 12.000, de préférence entre 5000 et 9000.

4. Composition réactive à un seul composant, durcissant à chaud selon au moins une des revendications précédentes, **caractérisée par** une teneur supplémentaire en au moins une poudre polymère thermoplastique.

5. Composition durcissant à chaud selon au moins une des revendications précédentes, **caractérisée en ce que**, pour le durcissement, on utilise un système de vulcanisation de soufre, d'accélérateurs organiques de vulcanisation et de composés du zinc.

6. Composition durcissant à chaud selon au moins une des revendications précédentes, **caractérisée en ce que** le système de vulcanisation est constitué par du soufre pulvérulent à concurrence de 4 % en poids à 25 % en poids, de préférence de 5 % en poids à 15 % en poids, des accélérateurs organiques à concurrence de 0,25 % en poids à 8 % en poids, de préférence de 0,4 % en poids à 6 % en poids, et par des composés du zinc, de préférence de l'oxyde de zinc à concurrence de 0,5 % en poids à 10 % en poids, de préférence de 2 % en poids à 8 % en poids, les % en poids se rapportant à la composition totale.

7. Composition durcissant à chaud selon au moins une des revendications précédentes, **caractérisée en ce que** le système de vulcanisation contient en outre un agent de réticulation bifonctionnel de vulcanisation à concurrence de 0 à 2 % en poids.

8. Composition durcissant à chaud selon la revendication 7, **caractérisée en ce qu'**on utilise, à titre d'agent de réticulation bifonctionnel de vulcanisation, des dithiocarbamates bifonctionnels, en particulier le 1,6-bis(N, N-dibenzylthiocarbamoyldithio)-hexane.

9. Composition selon au moins une des revendications précédentes, **caractérisée en ce qu'**elle contient en outre des matières de charge, des adjuvants rhéologiques, des huiles d'allongement, des agents de transformation en mousse, des pigments, des promoteurs d'adhérence et/ou des agents de protection contre le vieillissement.

10. Composition selon au moins une des revendications précédentes, contenant
- du caoutchouc solide à concurrence de 0 à 15 % en poids, de préférence de 0 à 12 % en poids ;
- du polybutadiène liquide comprenant des doubles liaisons vinyle 1,2 à concurrence de 10 à 20 %, trans 1,4 à concurrence de 50 à 60 %, et cis 1,4 à concurrence de 25 à 35 % : à concurrence de 2 à 50 % en poids, de préférence à concurrence de 5 à 42 % en poids ;
- du polybutadiène contenant des groupes carboxyle, à concurrence de 0 à 25 % en poids, de préférence de 1 à 15 % en poids ;
- du soufre à concurrence de 4 à 25 % en poids, de préférence de 5 à 15 % en poids ;
- des accélérateurs à concurrence de 0,25 à 8,0 % en poids, de préférence de 0,4 à 6 % en poids ;
- des agents de réticulation bifonctionnels de vulcanisation, à concurrence de 0 à 2 % en poids, de préférence de 0 à 1 % en poids ;
- de l'oxyde de zinc à concurrence de 0,5 à 10 % en poids, de préférence de 2 à 8 % en poids ;
- de la résine phénolique à concurrence de 0 à 8 % en poids, de préférence de 0 à 6 % en poids ;
- du sel disodique de l'hexaméthylène-1,6-bis(thiosulfate) à concurrence de 0 à 2,5 % en poids, de préférence de 0,1 à 1,8 % en poids ;
- des antioxydants à concurrence de 0 à 2 % en poids, de préférence de 0,1 à 1,0 % en poids ;
- de l'oxyde de calcium à concurrence de 0 à 8 % en poids, de préférence de 1 à 6 % en poids ;
- du noir de carbone à concurrence de 0 à 4 % en poids, de préférence de 0,1 à 2 % en poids ;
- du carbonate de calcium non revêtu à concurrence de 10 à 45 % en poids, de préférence de 15 à 40 % en poids ;
- du carbonate de calcium revêtu à concurrence de 0 à 30 % en poids, de préférence de 5 à 18 % en poids ;
la somme des constituants de la composition correspondant à 100 %.

11. Utilisation de la composition selon au moins une des revendications précédentes, comme adhésif, agent d'étanchéité ou matière d'enduction à un seul composant dans le domaine de la construction automobile.
